# EUROPEAN PATENT SPECIFICATION

(11) **EP 3 988 418 B1**
(45) Date of publication and mention of the grant of the patent: **12.11.2025**
(21) Application number: 20825540.6
(22) Date of filing: 22.04.2020
(51) Int. Cl.: B61D 17/04, B62D 31/00

(54) **RAIL VEHICLE BODY STRUCTURE**
AUFBAU EINER SCHIENENFAHRZEUGKAROSSERIE
STRUCTURE DE CARROSSERIE DE VÉHICULE FERROVIAIRE

(30) Priority: 21.06.2019 CN 201910542773
(43) Date of publication of application: 27.04.2022
(73) Proprietor: CRRC QINGDAO SIFANG CO., LTD., Chengyang District Qingdao Shandong 266111 (CN)
(72) Inventor: DING, Sansan, Qingdao Shandong 266111 (CN); LIANG, Haiting, Qingdao Shandong 266111 (CN); ZHANG, Lianhe, Qingdao Shandong 266111 (CN); WANG, Wanjing, Qingdao Shandong 266111 (CN); TIAN, Aiqin, Qingdao Shandong 266111 (CN)
(74) Representative: Prinz & Partner mbB
(86) International application number: PCT/CN2020/086012
(87) International publication number: WO 2020/253356

(56) References cited:
- CN-A- 110 281 962
- CN-U- 204 355 053
- CN-U- 205 469 074
- GB-A- 375 781
- JP-A- H05 213 189
- US-A- 2 223 746
- US-A- 4 353 313

## Description

The present application claims the priority to Chinese Patent Application No. 201910542773.5, titled "RAIL VEHICLE BODY STRUCTURE", filed with the China National Intellectual Property Administration on June 21, 2019.

### FIELD

The present application relates to the technical field of rail vehicles, and in particular to a body structure of a rail vehicle.

### BACKGROUND

With the continuous increase of the rail transit speed, a series of problems such as high resistance, high energy consumption, high vibration and high noise have been brought to the train. To solve these problems, it is necessary to improve the strength and optimize the structure of a train on the basis of lightweight. The traditional metal material vehicle body structure has limited lifting space to solve the above problem. Thus, new lighter and stronger material is required.

In addition, the existing vehicle body structure of the rail vehicle has many modules and a large assembly amount, and a large number of modules are connected by rivets, the processing amount of the rivet holes is large and it is easy to leak rain; a large number of metal connectors are used, and the weight is increased.

Therefore, how to provide a rail vehicle body structure with a high degree of lightness, a small number of parts, and a greatly reduced assembly volume is an important technical problem to be solved by those skilled in the art.

GB375781A discloses side walls of a railway or other vehicle which, in themselves, possess a degree of rigidity are reinforced against buckling by means of applied profile members or by longitudinal corrugations extending at short intervals apart along the entire length of the walls, and by transverse frame members also arranged at spaced intervals, corresponding means and corrugations also serving if desired, to reinforce the floor and roof. The side walls are interrupted by windows, additional stiffening profiles are disposed at the levels of the upper and lower edges of the window frames, the space between such profiles in some cases being filled in by a force-transmitting system of struts, and the window frames being made of a hexagonal or other conforming shape. The transverse frames are braced by diagonal or other members so disposed as to leave suitable passage ways or corridors, or, where an uninterrupted body interior is desired, the uprights may be connected at their bases by strong floor supporting beams. In another construction the reinforcing corrugations are formed on the longitudinal edges of plates, which may be arranged to give a smooth exterior or smooth interior surface as desired, a tube in two parts constituting the lower edge of the wall. The floor is supported on lattice or other girder systems, and interior or exterior finishes are provided for the walls, the spaces between the inner and outer coverings of the sides &c. being filled with heat-insulating material, if desired. Buffers may be fitted both to the upper and lower parts of the end walls and may be of ordinary construction or consist of transverse beams supported or not by springs or, in another arrangement, a pneumatic rubber tyre or a solid air-cored length of rubber may surround the entire end wall. When buffer beams are employed, they may be connected by additional longitudinal members, which fracture under excessive shocks, the latter being finally absorbed by the vehicle bodies.

US4353313A discloses a railway carriage body comprises a shell structure formed from a base sub-assembly, a pair of side-and-roof sub-assemblies each of which constitute one side and part of the roof of the body, and a pair of endwall units. The base and side-and-roof sub-assemblies when assembled together make up a series of transverse rectangular frames interconnected by longitudinal girders to which a sheet metal covering is fixed. Each frame includes a two-part lower transverse element forming part of the base sub-assembly, and a two-part upper transverse frame element the two component parts of which are included in respective ones of the side-and-roof sub-assemblies. The two frame parts making up each upper and lower transverse frame element are so fashioned as to permit them to be adjusted longitudinally of each other during assembly and prior to being rigidly connected together; as a result, the width of the carriage body can be set as required. US2223746A discloses a vehicle the combination of: a primary structure including a live load carrying shell; a secondary structure including an end load column within and extending continuously along the bottom portion of the Primary structure; load distributing members connecting the ends of said column to the ends of. the primary structure; a rigid connection between said column and the primary structure at substantially their longitudinal centers, said column being not otherwise secured to the primary structure against longitudinal movement relative thereto; and, wheel support applied to the primary structure independently of the secondary structure, whereby the dead load of the primary structure is carried directly on the wheel support, the live load is carried by the primary structure, and the dead load of the secondary structure is carried by the primary structure.

### SUMMARY

In order to solve the above technical problems, the present application provides a rail vehicle body structure, the rail vehicle body structure has a high degree of lightweight and a small number of parts and may greatly reduce the amount of assembly.

In order to solve the above technical problems, the present application provides a rail vehicle body structure according to claim 1.

Optionally, a connecting plate is provided on an inner side of a bottom of the rail vehicle body structure.

Optionally, the annular beam and the connecting plate are connected by rivets or bolts, and the underframe side beam, the corrugated plate and the connecting plate are connected by rivets or bolts.

Optionally, a sealant is coated between the annular beam and the connecting plate, and between the underframe side beam, the corrugated plate and the connecting plate.

Optionally, a skin is laid on an outside of the corrugated plate and the underframe side beam.

Optionally, the underframe side beam is riveted with an equipment mounting part, and the equipment mounting part is provided with a sliding groove.

Optionally, the corrugated plate, the annular beam, the underframe cross beam, the underframe side beam and the skin are all made of carbon fiber composite materials.

Compared with the above background technology, the rail vehicle body structure provided by the present application has the following beneficial effects:
1. using carbon fiber composite materials, the vehicle body is light in weight.
2. the cross-section is a cylindrical overall structure with no joints and good air tightness.
3. the cylindrical overall structure has a high degree of automation during manufacture and high production efficiency.
4. the number of parts is small and the assembly volume is low.

### BRIEF DESCRIPTION OF THE DRAWINGS

FIG. 1 is a cross-sectional view of a rail vehicle body structure provided by a specific embodiment of the present application;
FIG. 2 is a partial enlarged view of position A in FIG. 1;
FIG. 3 is a cross-sectional view of the skin of the rail vehicle body structure provided by a specific embodiment of the present application;
FIG. 4 is a cross-sectional view of a corrugated plate of a rail vehicle body structure provided by a specific embodiment of the present application;
FIG. 5-1 and FIG. 5-2 are respectively partial enlarged views of positions 11 and 12 in FIG. 4;
FIG. 6 is a cross-sectional view of an annular beam of a rail vehicle body structure provided by a specific embodiment of the present application;
FIG. 7 is a cross-sectional view of an underframe cross beam of a rail vehicle body structure provided by a specific embodiment of the present application;
FIG. 8 is a cross-sectional view of an underframe side beam of a rail vehicle body structure provided by a specific embodiment of the present application.

Reference numerals are listed as follows,

| | | | |
|---|---|---|---|
| 1 | corrugated plate; | 11 | rib; |
| 12 | interface part; | 2 | annular beam; |
| 3 | underframe cross beam; | 21, 31 | rib passage notch; |
| 4 | underframe side beam; | 5 | skin; |
| 6 | connecting plate; | 7 | equipment mounting part; |
| 71 | sliding groove. | | |

### DETAILED DESCRIPTION OF THE EMBODIMENTS

In order to provide those skilled in the art a better understanding of the solutions of the present application, the present application is described hereinafter in further detail in conjunction with the drawings and embodiments.

In the description of the present application, it is to be understood that the orientation or positional relationships indicated by terms "center", "longitudinal", "lateral", "length", "width", "thickness", "up", "down", "front", "rear", "left", "right", "vertical", "horizontal", "top", "bottom", "inner", "outer", "clockwise", "anticlockwise" and the like are based on the orientation or positional relationships shown in the drawings, and are merely for the convenience of describing the present application and the simplification of the description, and do not indicate or imply that the device or member referred to must be in a particular orientation, or be constructed and operated in a particular orientation, and therefore should not be construed as a limitation to the scope of the present application.

In addition, the terms "first", "second" and the like are for purpose of description, and should not be interpreted as indicating or implying relative importance or implying the number of the indicated technical features. Therefore, the features defined by "first" and "second" may explicitly or implicitly include one or more of the features. In the description of the present disclosure, the meaning of "multiple" is two or more, unless specifically defined otherwise.

In the description of the present application, it should be pointed out that, terms "install", "link", "connect" and "fix" should be understood broadly, unless otherwise specifically defined. For example, it can be fixedly connected or detachably connected or integrally connected; it can be mechanically connected or electrically connected; it can be directly connected or indirectly connected through intermediate media, or inner parts of two components are in communication with each other. For those skilled in the art, the specific meaning of the above terms in the present application may be understood in the light of specific circumstances.

A core of the present application is to provide a rail vehicle body structure. The rail vehicle body structure has a high degree of lightweight, a small number of parts, and may greatly reduce the amount of assembly.

In order to provide those skilled in the art with a better understanding of the solutions of the present application, the present application will be described hereinafter in further detail in conjunction with the drawings and specific embodiments.

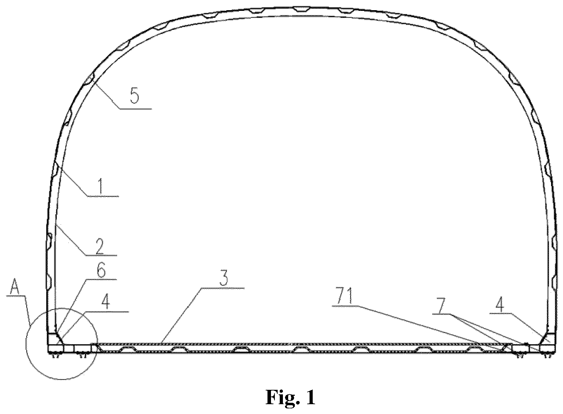

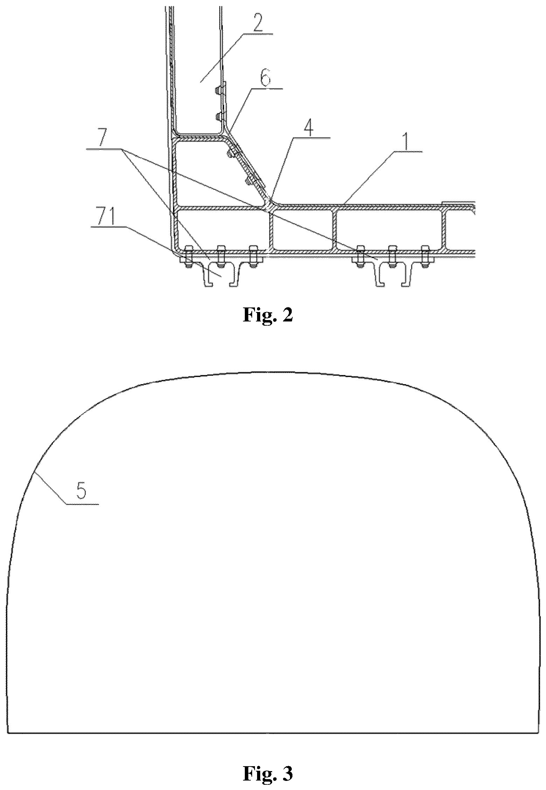

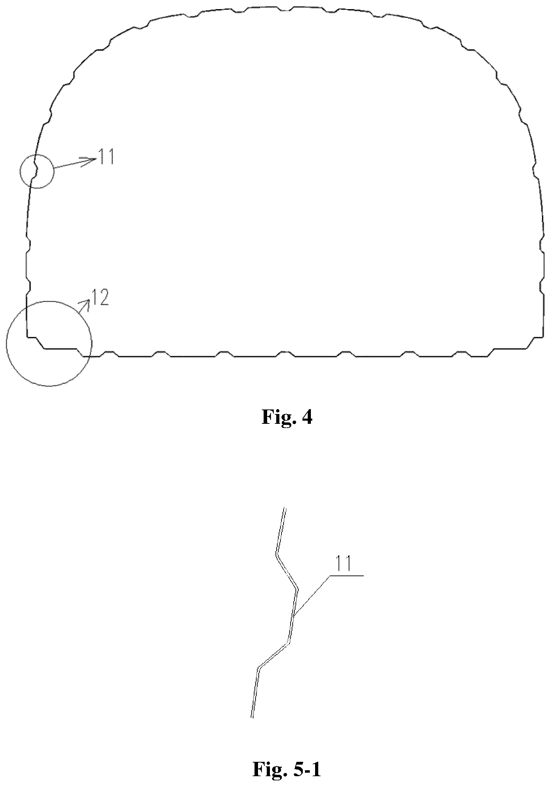

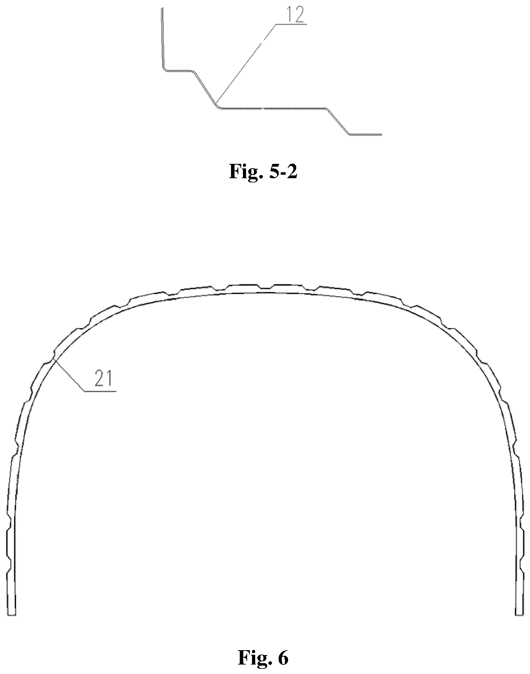

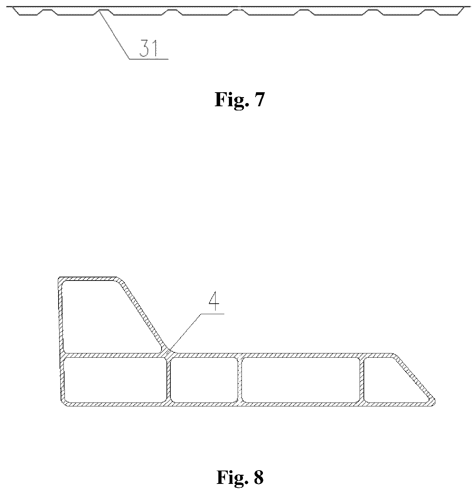

Referring to FIG.1 to FIG.8, FIG. 1 is a cross-sectional view of a rail vehicle body structure provided by a specific embodiment of the present application; FIG. 2 is a partial enlarged view of position A in FIG. 1; FIG. 3 is a cross-sectional view of the skin of the rail vehicle body structure provided by a specific embodiment of the present application; FIG. 4 is a cross-sectional view of a corrugated plate of a rail vehicle body structure provided by a specific embodiment of the present application; FIG. 5-1 and FIG. 5-2 are respectively partial enlarged views of positions 11 and 12 in FIG. 4; FIG.6 is a cross-sectional view of an annular beam of a rail vehicle body structure provided by a specific embodiment of the present application; FIG. 7 is a cross-sectional view of an underframe cross beam of a rail vehicle body structure provided by a specific embodiment of the present application; FIG. 8 is a cross-sectional view of an underframe side beam of a rail vehicle body structure provided by a specific embodiment of the present application.

In a specific embodiment, the rail vehicle body structure provided by the present application includes a cylindrical corrugated plate 1; an annular beam 2 and an underframe cross beam 3 nested inside the corrugated plate 1; and an underframe side beam 4 arranged between the annular beam 2 and the underframe cross beam 3; a pair of interface parts 12 are symmetrically arranged on both sides of the bottom of the corrugated plate 1, and the underframe side beams 4 are arranged outside the pair of interface parts 12.

In the rail vehicle body structure provided by the present application, a connecting plate 6 is provided on an inner side of the bottom of the rail vehicle body structure. The annular beam 2 is connected with the connecting plate 6 by rivets or bolts, and the underframe side beam 4, the corrugated plate 1 and the connecting plate 6 are connected by rivets or bolts, and a sealant may be applied between the annular beam 2 and the connecting plate 6 and between the underframe side beam 4, the corrugated plate 1 and the connecting plate 6 at the same time. A skin 5 is laid outside the corrugated plate 1 and the underframe side beam 4. The corrugated plate 1 is provided with multiple ribs 11, and the positions of the ribs 11 may be determined according to the interior decoration, equipment interface and strength requirements. The annular beam 2 and the underframe cross beam 3 are used for improving the rigidity and strength of the vehicle body. The annular beam 2 is provided with a rib passage notch 21 at a position corresponding to each of the multiple ribs 11, and the underframe cross beam 3 is provided with a rib passage notch 31 at a position corresponding to the rib 11. An equipment mounting part 7 is riveted on the underframe side beam 4, and the equipment mounting part 7 is provided with a sliding groove 71 for providing the equipment interface, and the shape of the sliding groove 71 may be varied according to specific requirements. The corrugated plate 1, the annular beam 2, the underframe cross beam 3, the underframe side beam 4 and the skin 5 are all made of carbon fiber composite materials.

The rail vehicle body structure provided by the present application is a cylindrical integrally-formed structure, and the skin 5 and the corrugated plate 1 are integrally formed by adopting an automatic laying technology, and the underframe side beam 4 is arranged between the skin 5 and the corrugated plate 1, and the connection strength is high.

The manufacturing process of the rail vehicle body structure provided by the present application is as follows: pre-forming the cylindrical corrugated plate 1 by the automatic laying technology, and after the pre-forming, placing a sandwich material (the sandwich material may be foam or paper honeycomb) at the rib 11, and placing the underframe side beam 4 at each of two sides, and then automatically laying the skin 5 at an outside, and then performing an integral curing and formation, finally, placing the annular beam 2 and the underframe cross beam 3, and finally performing a secondary curing.

The above embodiments are only preferred embodiments of the present application. It should be noted that, for those skilled in the art, other improvements and modifications may be further made without departing from the principle of the present application, and these improvements and modifications should also be deemed as falling into the protection scope of the appended claims.

## Claims

1. A rail vehicle body structure, comprising a cylindrical corrugated plate (1);
an annular beam (2) and an underframe cross beam (3) nested inside the corrugated plate (1); and,
an underframe side beam (4) arranged between the annular beam (2) and the underframe cross beam (3);
a pair of interface parts (12) are symmetrically arranged on both sides of a bottom of the corrugated plate (1),
and the underframe side beam (4) is arranged outside each of the pair of interface parts (12),
wherein a plurality of ribs (11) are provided on the corrugated plate (1), **characterised in that**, the plurality of ribs (11) are defined by trapezoidal corrugations of the corrugated plate (1), and
the annular beam (2) and the underframe cross beam (3) are provided with a rib passage notch (21, 31) at a position corresponding to each of the plurality of ribs (11).

2. The rail vehicle body structure according to claim 1, wherein a connecting plate (6) is provided on an inner side of a bottom of the rail vehicle body structure.

3. The rail vehicle body structure according to claim 2, wherein the annular beam (2) and the connecting plate (6) are connected by rivets or bolts, and the underframe side beam (4), the corrugated plate (1) and the connecting plate (6) are connected by rivets or bolts.

4. The rail vehicle body structure according to claim 2 or claim 3, wherein a sealant is coated between the annular beam (2) and the connecting plate (6), and between the underframe side beam (4), the corrugated plate (1) and the connecting plate (6).

5. The rail vehicle body structure according to claim 1, wherein a skin (5) is laid on an outside of the corrugated plate (1) and the underframe side beam (4).

6. The rail vehicle body structure according to claim 1, wherein the underframe side beam (4) is riveted with an equipment mounting part (7), and the equipment mounting part (7) is provided with a sliding groove (71).

7. The rail vehicle body structure according to claim 5, wherein the corrugated plate (1), the annular beam (2), the underframe cross beam (3), the underframe side beam (4) and the skin (5) are all made of carbon fiber composite materials.

## Patentansprüche

1. Schienenfahrzeugwagenkastenaufbau, mit einer zylindrischen Wellplatte (1),
einem ringförmigen Träger (2) und einem Untergestellquerträger (3), die in die Wellplatte (1) eingesetzt sind, und
einem Untergestellseitenholm (4), der zwischen dem ringförmigen Träger (2) und dem Untergestellquerträger (3) angeordnet ist,
wobei zwei Kopplungsstellenteile (12) symmetrisch an beiden Seiten eines Bodens der Wellplatte (1) angeordnet sind und der Untergestellseitenholm (4) jeweils außerhalb der beiden Kopplungsstellenteile (12) angeordnet ist,
wobei an der Wellplatte (1) mehrere Rippen (11) vorgesehen sind, **dadurch gekennzeichnet, dass** die mehreren Rippen (11) durch trapezförmige Wellungen der Wellplatte (1) gebildet sind und
der ringförmige Träger (2) und der Untergestellquerträger (3) an einer Position, die jeder der mehreren Rippen (11) entspricht, mit einer Rippendurchgangseinbuchtung (21, 31) versehen sind.

2. Schienenfahrzeugwagenkastenaufbau nach Anspruch 1, bei dem an einer Innenseite eines Bodens des Schienenfahrzeugwagenkastenaufbaus eine Verbindungsplatte (6) vorgesehen ist.

3. Schienenfahrzeugwagenkastenaufbau nach Anspruch 2, bei dem der ringförmige Träger (2) und die Verbindungsplatte (6) mit Nieten oder Schrauben verbunden sind und der Untergestellseitenholm (4), die Wellplatte (1) und die Verbindungsplatte (6) mit Nieten oder Schrauben verbunden sind.

4. Schienenfahrzeugwagenkastenaufbau nach Anspruch 2 oder Anspruch 3, bei dem zwischen dem ringförmigen Träger (2) und der Verbindungsplatte (6) sowie zwischen dem Untergestellseitenholm (4), der Wellplatte (1) und der Verbindungsplatte (6) ein Dichtungsmittel aufgebracht ist.

5. Schienenfahrzeugwagenkastenaufbau nach Anspruch 1, bei dem auf eine Außenseite der Wellplatte (1) und des Untergestellseitenholms (4) eine Außenhaut (5) aufgelegt ist.

6. Schienenfahrzeugwagenkastenaufbau nach Anspruch 1, bei dem der Untergestellseitenholm (4) mit einem Ausrüstungsmontageteil (7) vernietet ist und das Ausrüstungsmontageteil (7) mit einer Gleitnut (71) versehen ist.

7. Schienenfahrzeugwagenkastenaufbau nach Anspruch 5, bei dem die Wellplatte (1), der ringförmige Träger (2), der Untergestellquerträger (3), der Untergestellseitenholm (4) und die Außenhaut (5) alle aus Kohlefaserverbundwerkstoffen bestehen.

## Revendications

1. Structure de caisse de véhicule ferroviaire, comprenant une plaque cannelée cylindrique (1) ;
une barre annulaire (2) et une barre transversale de châssis (3) emboîtées à l'intérieur de la plaque cannelée (1) ; et,
une barre latérale de châssis (4) agencée entre la barre annulaire (2) et la barre transversale de châssis (3) ;
une paire de pièces d'interface (12) étant agencée symétriquement des deux côtés d'une partie inférieure de la plaque cannelée (1), et la barre latérale de châssis (4) étant agencée à l'extérieur de chacune des pièces d'interface (12) de la paire,
une pluralité de nervures (11) étant prévues sur la plaque cannelée (1), **caractérisée en ce que** la pluralité de nervures (11) est définie par des cannelures trapézoïdales de la plaque cannelée (1), et
la barre annulaire (2) et la barre transversale de châssis (3) sont pourvues d'une encoche de passage de nervure (21, 31) à une position correspondant à chaque nervure de la pluralité de nervures (11).

2. Structure de caisse de véhicule ferroviaire selon la revendication 1, une plaque de raccordement (6) étant prévue d'un côté intérieur d'un fond de la structure de caisse de véhicule ferroviaire.

3. Structure de caisse de véhicule ferroviaire selon la revendication 2, la barre annulaire (2) et la plaque de raccordement (6) étant reliées par des rivets ou des boulons, et la barre latérale de châssis (4), la plaque cannelée (1) et la plaque de raccordement (6) étant reliées par des rivets ou des boulons.

4. Structure de caisse de véhicule ferroviaire selon la revendication 2 ou la revendication 3, un produit d'étanchéité étant appliqué entre la barre annulaire (2) et la plaque de raccordement (6), et entre la barre latérale de châssis (4), la plaque cannelée (1) et la plaque de raccordement (6).

5. Structure de caisse de véhicule ferroviaire selon la revendication 1, une peau (5) étant posée sur une face extérieure de la plaque cannelée (1) et de la barre latérale de châssis (4).

6. Structure de caisse de véhicule ferroviaire selon la revendication 1, la barre latérale de châssis (4) étant rivetée à une pièce de montage d'équipement (7), et la pièce de montage d'équipement (7) étant pourvue d'une rainure de glissement (71).

7. Structure de caisse de véhicule ferroviaire selon la revendication 5, la plaque cannelée (1), la barre annulaire (2), la barre transversale de châssis (3), la barre latérale de châssis (4) et la peau (5) étant toutes réalisées en matériaux composites de fibres de carbone.
